# EUROPEAN PATENT APPLICATION

(11) **EP 1 970 833 A1**
(43) Date of publication of application: **17.09.2008**
(21) Application number: 05819901.9
(22) Date of filing: 15.12.2005
(51) Int. Cl.: G06F 21/20

(54) **IMPROPER COMMUNICATION PROGRAM RESTRICTION SYSTEM AND PROGRAM**

(71) Applicant: Netstar, Inc., Shibuya-ku Tokyo 1500013 (JP)
(72) Inventor: OKAMOTO, Keiichi, Tokyo 150-0013 (JP); NAEKI, Ryu, Tokyo 150-0013 (JP)
(74) Representative: Hooiveld, Arjen Jan Winfried
(86) International application number: PCT/JP2005/023437
(87) International publication number: WO 2007/069337

(57) **Abstract**

A server controlling each computer is provided with means for distributing file patterns for identifying unauthorized communication programs. Said computer is provided with a filtering module for performing monitoring and regulation processing on communications originating from the computer. Said filtering module is provided with a database for storing the file patterns acquired from the server, means for monitoring the communications of a communication module started by the computer and detecting the occurrence of a communication start request to other computers, means for comparing the file pattern of the communication module to the file patterns within the database and inspecting whether or not the communication module is an unauthorized communication program, and means for regulating the communications of the communication module when the inspection means has judged it to be an unauthorized communication program.

## Description

### TECHNICAL FIELD

The present invention relates to a computer system for regulating unauthorized communications, and in particular to a computer system and associated program for monitoring communication modules (being various kinds of communication programs) operating on an individual's computer and automatically regulating unauthorized communications before an access is made from an individual's computer to external computers.

### BACKGROUND ART

Recently, illegal music file-swapping software or the like has been distributed in various markets. In order to regulate communication programs which can actively facilitate illegal information distribution such as copyright infringement, communication data have been analyzed using a filtering device (such as a gateway device) installed between a LAN (Local Area Network) and the Internet network, and regulations have been performed when communication programs have been judged as being unauthorized on the basis of their communication contents. One example of regulation being performed by a gateway device is provided by a known product in which a packet is judged individually, any unnecessary communications, which had been annoying an administrator, are detected, and communications by Winny or the like from within a computer may be blocked as required. (See Non-Patent Document 1.)

Conversely, a product which performs regulation using an individual's own computer, in addition to one which blocks communications through a designated port, is known (and is a software tool) which has a function of making specific malicious applications such as spyware unexecutable. (See Non-Patent Document 2.)

### <DOCUMENT LIST>

### (Non-Patent Document 1)

The home page of NetAgent Co., Ltd. (the web site describing the features of the product named "One Point Wall"), [searched on October 20, 2005], Internet <URL: http://www.onepointwall.jp/>

### (Non-Patent Document 2)

The web page presenting the product of Websense, Inc (the product named "Websense Enterprise Client Policy Manager (CPM)"), [searched on: October 20, 2005],
Internet
<http://www.atmarkit.co.jp/news/200405/20/websense.html>

### SUMMARY OF INVENTION

### (Problems to be solved by the invention)

As described above, in order to limit communication programs which can actively facilitate illegal information distribution and communication programs which are unnecessary for business or the like (hereinafter referred to as "unauthorized communication programs"), there is provided both a method for regulating such by use of a filtering device installed between a LAN and the Internet network and a method for regulating such by use of an individual's own computer. When performing regulation by use of said filtering device, although accesses from within the LAN to the Internet network can be monitored, it is disadvantageous when, for example, a notebook computer, which is also a resource of a company, is carried out of the company, as regulation of unauthorized communication programs used on the notebook computer cannot be performed. The method described in Non-Patent Document 1 is disadvantageous in that communication contents are required to be analyzed, which increases the load on a CPU of the gateway device, thereby creating a bottleneck when communicating with external computers and reducing the communication speed of a client computer accordingly.

The method described in Non-Patent Document 2, on the other hand, is advantageous in that since regulation is performed by an individual's own computer, communications can be regulated even when a computer is carried out of the LAN. The method described in Non-Patent Document 2 can make an application unexecutable, but cannot block communications made by the application only, making it disadvantageous in that it cannot be used for an application for which offline use is allowed.

The present invention has been developed on the basis of the above-described issues. It is an object of the present invention to provide an unauthorized communication program regulation system and associated method that allows for the performing of settings that relate to the monitoring and regulation of all computers under server control by use of a server installed in a local area network and that also allows for the performing of monitoring and regulation of unauthorized communication programs, regardless of the network environment of the computers under server control.

### (Means for solving the problems)

The present invention relates to an unauthorized communication regulation program and its associated system in a client-server system which has a centralized control server for controlling client computers in a local area network. The above-described object of the present invention is achieved for the system by providing said centralized control server with distribution means for distributing file patterns for identifying various kinds of unauthorized communication programs to each client computer that is under server control through the local area network, providing said client computer with a filtering module for performing monitoring and regulation processing on communications originating from said computer, and providing said filtering module with a database for storing said file patterns acquired from said centralized control server, communication detection means for monitoring communication events originating from a communication module started by said client computer and detecting the occurrence of a communication start request to other computers, inspection means for comparing the file pattern of the communication module of a request source of said communication start request to the file patterns within said database and inspecting whether or not said communication module is an unauthorized communication program, and communication regulation means for regulating the communication of said communication module before the execution of said communication start request when said inspection means has judged it to be an unauthorized communication program.

The above-described object of the present invention is achieved more effectively by providing said centralized control server with setting means for setting regulation rules, including information on the presence or absence of a regulation of each communication module, allowing said communication regulation means to perform said regulation processing on communications targeting a communication module in which the presence of a regulation is designated by said setting means, and allowing said setting means to display the list of said unauthorized communication programs on a display section of a control terminal as a setting screen and to have a function of setting a communication module selected from the list as a regulation target, respectively.

Furthermore, the above-described object of the present invention is achieved more effectively by allowing said communication start request to be a connection request or a data transmission request to other computers, allowing said distribution means to have a function of distributing the latest file patterns received from said data center to each client computer at appropriate times, allowing said filtering module to continue said monitoring and regulation processing on communications when the monitoring of said unauthorized communication program starts, even under the condition that said client computer cannot communicate with said centralized control server, allowing said file patterns possessed by said centralized control server to include file patterns for identifying normal applications other than unauthorized communication programs, and allowing said communication regulation means to have a function of allowing only communications of applications designated as "no regulation" by said setting means, respectively.

For the program, the above-described object of the present invention is achieved by a program allowing said client computer to achieve a function of receiving file patterns for identifying various kinds of unauthorized communication programs and storing them in a database, a function of monitoring communication events originating from a communication module started by said client computer and detecting the occurrence of a communication start request to other computers, a function of comparing the file pattern of the communication module of a request source of said communication start request to the file patterns within said database and inspecting whether or not said communication module is an unauthorized communication program, and a function of regulating the communication of said communication module before the execution of said communication start request when said inspection means has judged it to be an unauthorized communication program.

The above-described object of the present invention is achieved more effectively by a program further allowing said client computer to achieve a function of receiving setting information on regulation rules including information on the presence or absence of a regulation of each communication module registered in said centralized control server and a function of performing said regulation processing on communications targeting a communication module in which the presence of regulation is designated by said setting means.

### (Effects of the invention)

The present invention monitors communication events originating from a communicationmodule, compares the file pattern of a communication start request from a communication module (being a communication program in any form) to the file patterns acquired in advance from a centralized control server to judge if it is an unauthorized communication program and regulates it before the start of the communication thereof, thereby achieving the following effects:
(1) The monitoring and regulation of unauthorized communication programs can be performed, regardless of the network environment of the computers under server control.
(2) Processing regarding monitoring and regulation on all the computers under the control of the centralized control server can be performed.
(3) Even when a computer is carried out of a local area network, the communication of an unauthorized communication program can be regulated, thereby preventing the computer carried out of the local area network from discharging personal information through the unauthorized communication program or from being a cause of a viral infection.
(4) Communication contents are not required to be analyzed, thereby achieving reduced load on a CPU when compared to a method which makes a judgment by analyzing communication contents.
(5) Unauthorized communication programs can be regulated on an individual basis, thereby exerting no influence on communication modules other than unauthorized communication programs.
(6) The communication of an unauthorized communication program can be regulated before it performs a connection, thereby preventing unauthorized material andreducingwasteful traffic in the local area network.

Furthermore, a data center is provided for integrally controlling file patterns and distributing the latest file patterns to the centralized server, thereby (7) providing flexible, quick adaptability to a new unauthorized communication program, eliminating the need for an administrator to create file patterns, and reducing burdens on the administrator accordingly.

### BRIEF DESCRIPTIONS OF THE DRAWINGS

Fig. 1 is a schematic diagram illustrating one example of the overall configuration of the unauthorized communication program regulation system of the present invention.
Fig. 2 is a basic block diagram illustrating an example of a configuration of the unauthorized communication program monitoring system 10 shown in Fig. 1.
Fig. 3 is a flowchart illustrating a basic operation example of the unauthorized communication program monitoring system of the present invention.
Fig. 4 is a flow chart illustrating the outline of the monitoring/regulation processing of the present invention on an unauthorized communication program.
Fig. 5 is a flowchart illustrating an operation example of the present invention when regulation rules and files patterns are acquired.
Fig. 6 is a flowchart illustrating an operation example of the present invention when monitoring an unauthorized communication program.

### (Reference Numerals)

1 Internet
2 Local area network
3 Client computer
10 Unauthorized program monitoring system
11 Communication module
12 Filtering module
13 File pattern database
20 Centralized control server

### DESCRIPTION OF EMBODIMENTS

Hereinafter, embodiments of the present invention will be described with reference to the drawings. The present invention is favorably applied to computer network systems set up in companies, public institutions, schools, or the like. Hereinafter, an example in which the present invention is applied to a client-server computer system will be described.

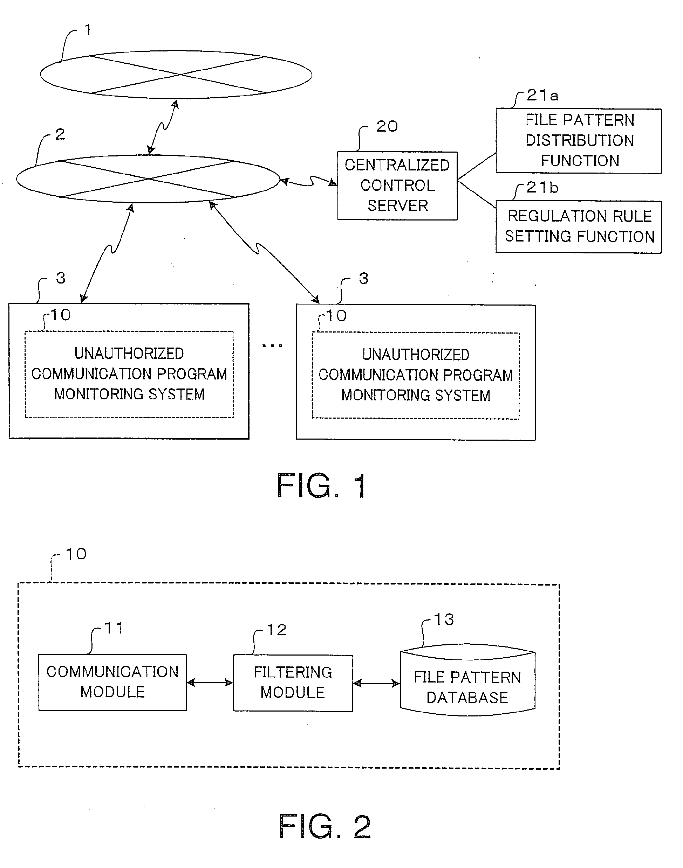

Fig. 1 schematically illustrates an example of the overall configuration of the unauthorized communication program regulation system (hereinafter referred to as "unauthorized communication regulation system") of the present invention. In Fig. 1, each client computer 3 is connected to a local area network (hereinafter referred to as "LAN") 2, and is connected to the Internet 1 through the LAN 2. Within the LAN 2, one or more centralized control servers 20 exist to control each client computer (being a user terminal) 3. The centralized control server 20 has, as functions of the present invention, a distribution function 21a for information on file patterns (hereinafter referred to as "file patterns") for identifying various kinds of unauthorized communication programs and a setting function 21b for regulation rules including processing forms on regulation. The means allowing the computer to implement these functions 21a and 21b is, in the present embodiment, a computer program. By allowing the program to be installed in a predetermined control computer and to operate, the computer is operated as the centralized control server 20 having the file pattern distribution function 21a and the regulation rule setting function 21b.

The distribution function 21a is a function of distributing the file patterns to each client computer 3 under control through the LAN 1. The distribution function 21a includes a function of distributing the regulation rules to each client computer 3 through the LAN 1. In the present embodiment, the file patterns are integrally controlled by a data center (not shown). The data center, when a new kind of unauthorized communication program which cannot be detected by the existing file patterns has been found, registers an additional file pattern capable of detecting the program in order to update the file patterns in succession and transmits the latest file patterns to the centralized control server 20 in response to demands therefrom, or at appropriate times.

The "regulation rules" set by the regulation rule setting function 21a prescribe rules concerning regulations on unauthorized communication programs as to what communication modules are regulated or not regulated and what regulation processing is performed and comprise information on the presence or absence of regulations and setting information on processing forms on regulation or the like. The regulation rules are pieces of information which can be set for each user, each group, or each system, the embodiments of which will be described later.

As the centralized control server 20, the number of which is arbitrarily selected, an existing control computer within the LAN 2 can be used. For example, a computer of an administrator or a predetermined server in a company and a computer of each teacher or a predetermined server in a school can be used as the centralized control server 20.

The client computer 3 (hereinafter referred to as "user terminal") is any information processor which can perform data communications with websites (including mobile sites) on the Internet 1 and can execute applications, and includes portable or desktop computers such as PCs (Personal Computers), WSs (Work Stations) and portable information communications devices such as cellular phones and PDAs (Personal Digital Assistants).

An unauthorized communication program monitoring system 10 operating on the user terminal 3 is a system constituting the main part of the unauthorized communication regulation system, or is a client module operating under the control of an OS (operating system), and is installed in each user terminal 3.

Fig. 2 shows an example of the configuration of the unauthorized communication program monitoring system 10 shown in Fig. 1 by a basic block diagram. The unauthorized communication program monitoring system 10 comprises a communication module 11 and a filtering module 12. The communication module 11 is a communication program in any form which communicates with other computers such as a web browser like Internet Explorer^{®} and a P2P (pier-to-pier) program. The filtering module 12 is a client module having the functions of monitoring and regulating communication processing in the communication module 11.

The filtering module 12 comprises, for example, "communication detection means" for monitoring communication events originating from the communication module 11 started by the client computer 3 and detecting the occurrence of a communication start request to other computers, "inspection means" for comparing the file pattern of the communication module of a request source of the communication start request to the file patterns stored in a file pattern database 13 and inspecting whether or not said communication module 11 is an unauthorized communication program, and "communication regulation means" for regulating the communication of the communication module before the execution of the communication start request when the inspection means has judged it to be an unauthorized communication program. These names of the above-listed means are given for convenience and correspond to the functions of the filtering module 12 and will be omitted in later descriptions.

In the present embodiment, the filtering module 12 consists of a computer program. By installing a program for processing steps, which are possessed by the filtering module 12 and will be described later, in the user terminal 3 and allowing it to operate, the computer is operated as the user terminal 3 having a self-monitoring function and a self-regulation function.

In the above-described configuration, the operation of the unauthorized communication regulation system of the present invention will now be outlined.

The filtering module 12 operating on the user terminal 3 within the LAN 2 communicates with the centralized control server 20 and acquires the file patterns and regulation rules of unauthorized communication programs. On acquiring such, the monitoring of the unauthorized communication programs starts. The communication module 11 to be monitored is, for example, a communication module capable of performing unauthorized communications and is one that has been set in the regulation rules in advance (for example, a P2P program such as "Winny"), including "one performing highly illegal communications (being one suspected of copyright infringement)," "one performing highly confidential communications," "one performing communications unnecessary for business or the like," and "one performing malicious communications."

When the monitoring of the unauthorized communication programs by the filtering module 12 is started, monitoring processing and regulation processing on the unauthorized communication programs continues, even when its user terminal 3 is taken out to a network environment in which it cannot communicate with the centralized control server 20.

The user terminal 3 on which the filtering module 12 operates, when it exists within the LAN 2, i.e., while it is connected to the LAN 2, acquires the file patterns (and regulation rules) of the unauthorized communication programs from the centralized control server 20 at appropriate times (at regular time intervals in this embodiment).

The filtering module 12 monitors communication events originating from the communication module 11 started by the user terminal 3, detects the occurrence of a connection request with other computers or a data transmission request thereto, performs a matching search between the file pattern of a request source and the file patterns of the unauthorized communication programs using the file pattern database 13, and judges whether or not the communication module 11 of the request source is an unauthorized program. When the communication module 11 is judged as an unauthorized program, in accordance with processing forms described in the regulation rules, appropriate regulation processes are implemented. The appropriate regulation processes are executed, including, for example, interrupting the communication, displaying a warning window on the screen of the user terminal, and transmitting notification information to notify the administrator through the centralized control server 20.

The centralized control server 20, on receiving a notification from the filtering module 12, for example, stores notification information (information on the terminal ID or user ID of the occurrence source, the ID of the unauthorized communication program, a communication recipient, or the like), transmits an e-mail to an administrator terminal, or displays a message when the administrator logs in to the centralized control server 20.

Hereinafter, the unauthorized communication regulation system of the present invention will be described in detail.

First, the configuration of the unauthorized communication program monitoring system 10 will be described.

The unauthorized communication program monitoring system, as is exemplified in Fig. 2, comprises the "communication module 11," the "filtering module 12," and the "file pattern database 13," as means for storing the file pattern of the communication module 11 (being each communication program), for storing the file patterns (being the pattern information group of each communication program) acquired from the centralized control server 20 in such a manner that they are searchable by the pattern information of each communication program.

The filtering module 12 is a client module which operates in pairs with the communication module 11. The filtering module 12 in the form of LSP (Layered Service Providers) uses an API (Application Program Interface) related to communication control such as a TCP/IP socket interface to perform monitoring processing and regulation processing on unauthorized communication programs of the present invention. The LSP is a system driver capable of performing specific application processing in the communication data processing of a transport layer of a reference model of an OSI (Open Systems Interconnection).

An API such as a TCP/IP socket interface has recently been provided in almost all OSs installed in general-purpose computers. For Windows^{®} as an OS, for example, communication control software having an API such as a socket interface called "Winsock" is available, allowing application-specific processing to be performed before the start of communications. In the present embodiment, using such an API, communications are detected at the stage of preparation processing for performing the communications, and monitoring processing and regulation processing on unauthorized communication programs are performed.

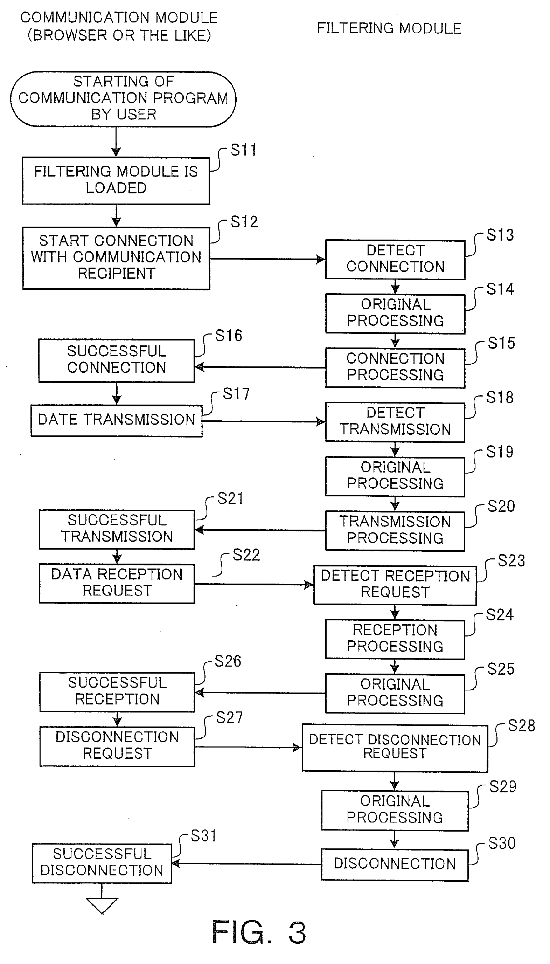

The basic operations of the communication module 11 and the filtering module 12 will now be described with reference to the flowchart shown in Fig. 3.

Fig. 3 is a flowchart showing a basic operation example of the unauthorized communication program monitoring system of the present invention and shows a mode in which the communication module, such as a browser, and the filtering module operate in pairs. As shown in the flowchart in Fig. 3, when the communication module 11 is started by a user, the filtering module 12 in the form of LSP is loaded (step S11).

When the communication module 11 starts the connection with a communication recipient, the filtering module 12 detects a connection request originating from the communication module 11 (step S12), performs its original processing as needed (step S13), and performs connection processing to be connected with the communication recipient (steps S14, S15). Hereinafter, as shown in steps S16 to S31, at the time of data transmission, data reception, and disconnection, the filtering module 12 detects those request messages, performs original processing (steps S19, S25, S29) as needed, respectively, and then performs the appropriate processing.

The filtering module 12 of the present invention, when detecting the connection request or transmission request (before performing communication processing), compares the file pattern of the communication module 11 of the request source of the connection request or transmission request (hereinafter referred to as "communication start request") to the file patterns of the file pattern database 13 in order to detect whether or not the communication module 11 is an unauthorized program and performs regulation processing according to the "regulation rules" when an unauthorized communication program is detected. By installing the filtering module 12 as part of communication control software (for example, the LSP of Winsock) operating cooperatively with an OS like that of the present embodiment, a communication-module-independent filtering module can be provided.

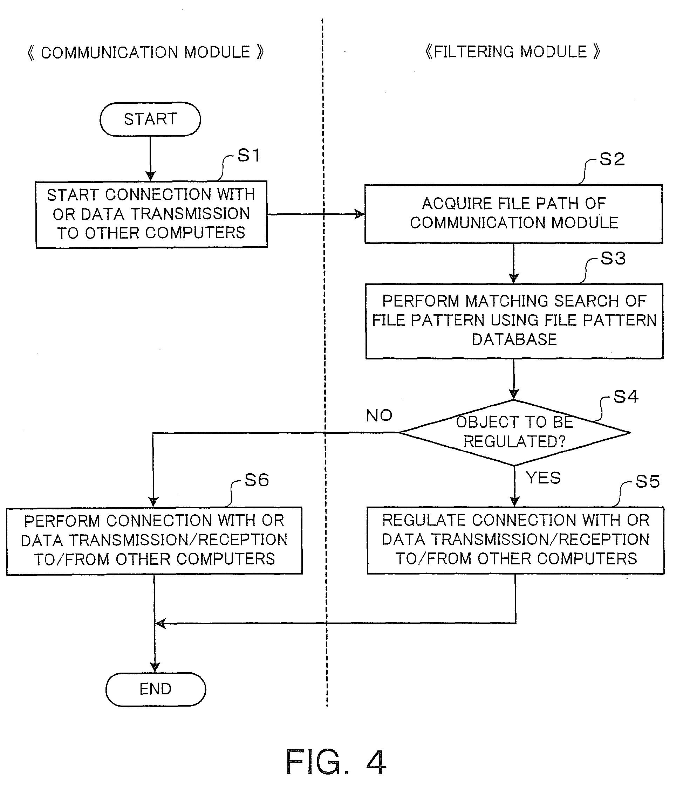

Next, the outline of the monitoring/regulation processing on unauthorized communication programs of the present invention will be described in accordance with the flowchart shown in Fig. 4.

When the communication module 11 of each user terminal 3 attempts to start the connection with or data transmission to other computers (step S1), the filtering module 12 detects the occurrence of a communication start request (a connection request or transmission request) of the communication module 11, acquires the file path of the communication module (the communication program of the request source of the communication start request) 11 (step S2), and performs a matching search between the file pattern of the executable file of the communication module 11 and the file patterns (pattern information of each communication program) within the file pattern database 13 (step S3).

When a communication module 11 with its pattern matched is detected, the filtering module 12 judges whether or not the communication module 11 is an object to be regulated (a communication program to be regulated as prescribed in the regulation rules) (step S4), and, when it is judged as an object to be regulated, regulates the connection with or data transmission/reception to/from other computers (i.e., it disconnects the communication) and starts warning processing (for example, notification processing by screen display) to either one of a user or an administrator or both in real time in accordance with processing forms at the time of regulation set in the regulation rules (step S5).

Conversely, when a communication module 11 with its pattern matched is not detected in step S3, or when it is judged as not being an object to be regulated in step S4, the filtering module 12 allows the communication start request and executes processing regarding the connection with or data transmission/reception to/from other computers (step S6). Hereinafter, the processing of the above steps S1 to S6 is repeated while the communication module 11 operates.

Next, the monitoring/regulation processing on unauthorized communication programs of the present invention will be described in detail with reference to the embodiments shown.

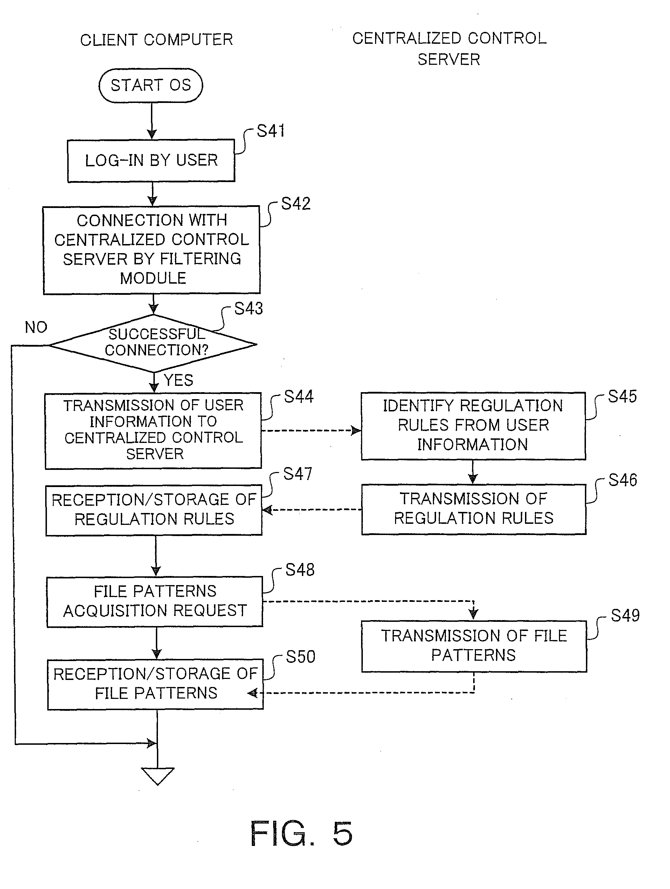

First, an operation example when acquiring the regulation rules and file patterns will be described in accordance with the flowchart shown in Fig. 5.

When an OS (operating system) is started by the turning-on of the user terminal 3 or the like, and a user logs in (step S41), the filtering module 12 detects the log-in and executes the connection processing with the centralized control server 20 (step S42). The filtering module 12 judges whether or not it has succeeded in the connection with the centralized control server 20 (step S43), and when it has succeeded in the connection, transmits user information as a regulation-rule acquisition request message to the centralized control server 20 (step S44). The centralized control server 20, on receiving the user information, identifies the regulation rules from the user information (step S45), and transmits the regulation rules, which are the latest or most up-to-date at the time, to the user terminal 3 (step S46). The filtering module 12 of the user terminal 3 acquires the regulation rules, and stores them in a storage medium such as a memory card (step S47). Then, a file-pattern acquisition request message is transmitted to the centralized control server 20 (step S48). The centralized control server 20, for example, checks the version of the file patterns on the user terminal 3, and when they are not the latest ones, transmits the latest version of the file patterns (step S49). The filtering module 12 of the user terminal 3 stores the file patterns received from the centralized control server 20 in the file pattern database 13 (steps S50, S51).

Hereinafter, the filtering module 12 of the user terminal 3, at appropriate times (at regular time intervals in the present embodiment), transmits a regulation-rule acquisition request message and a file-pattern acquisition request message to the centralized control server 20, and acquires and stores the latest regulation rules and the latest file patterns. In step S43, when the filtering module 12 has failed in the connection with the centralized control server 20, for example, when the portable user terminal 3 is taken outside of the company and used, i.e., when the user terminal 3 is not present within the LAN 2, the regulation rules and file patterns acquired last time are used.

Contents set in the regulation rules will now be described with reference to the embodiments shown.

The regulation rules can be set for each user (or each group or each system). For example, an administrator logs in to the centralized control server 20 from a control terminal (being a predetermined communication terminal), and sets information on the presence or absence of a regulation as the regulation rules. The centralized control server 20 has a function of, as a function of setting regulation rules, displaying a list of communication modules 11 (being various kinds of communication programs) on a display section of the control terminal (being a terminal for the administrator) as a setting screen, and setting a communication module 11 selected from the list as an object to be regulated.

The listed communication modules 11, in the present embodiment, are the communication modules, the file patterns of which are registered in the file pattern database 13, which are the candidate group of unauthorized communication programs including P2P programs such as "Winny," "WinMX," and "Shareaza," which are categorized as highly anonymous file-swapping (sharing) software. When the administrator selects an object to be regulated out of the candidate group of unauthorized communication programs and designates it, its information is set as an element for the regulation rules, and is stored as the regulation rules for the user (or group or system).

In addition to (a) the form as described above in which a designated communication module is set as an object to be regulated by a communication module of which the file pattern is registered, the following forms may be allowed in which communication contents at the TCP/IP level are analyzed to perform the following processing.

### (b) A form allowing only designated applications:

In this form, for example, the communications of all applications other than applications to be allowed can be interrupted, allowing for only the communication of designated applications (for example, a well-known browser) by the filtering module 12 of the user terminal.

### (c) A form allowing (or regulating) only the communications of designated applications using designated port numbers:

In this form, all communications using ports with numbers other than designated port numbers can be interrupted (or allowed) by the filtering module 12 of the user terminal. Moreover, for example, only HTTP (Hypertext Transfer Protocol)/HTTPS (Hypertext Transfer Protocol Security) in a browser (Internet Explorer^{®} or the like) can be allowed, and other FTP (File Transfer Protocol) connections or the like can be regulated.

### (d) A form allowing (or interrupting) communication at the level of designated TCP (Transmission Control Protocol) and UDP (User Datagram Protocol):

In this form, connection points can be limited, allowing for the interruption of communications other than ones to IP addresses designated by the administrator, with specific applications designated.

As the regulation rules, "the form of alert" may be set. The form of alert, for example, when the communication of an unauthorized communication program is detected, includes a plurality of alert forms: (b1) a form of notifying the administrator by an e-mail (a form of sending an alert e-mail to the administrator through the centralized control server), (b2) a form of notifying the administrator through message display on a control screen (a form of displaying on a screen after the log-in of the centralized control server), and (b3) a form of notifying a user by displaying a warning screen (a form of displaying a warning window on the display of the user terminal 3)

The administrator designates as to what notification is performed to whom (only the user on the access source, the user and the administrator, or only the administrator) and by what notification means by selecting one or a plurality of alert forms described above.

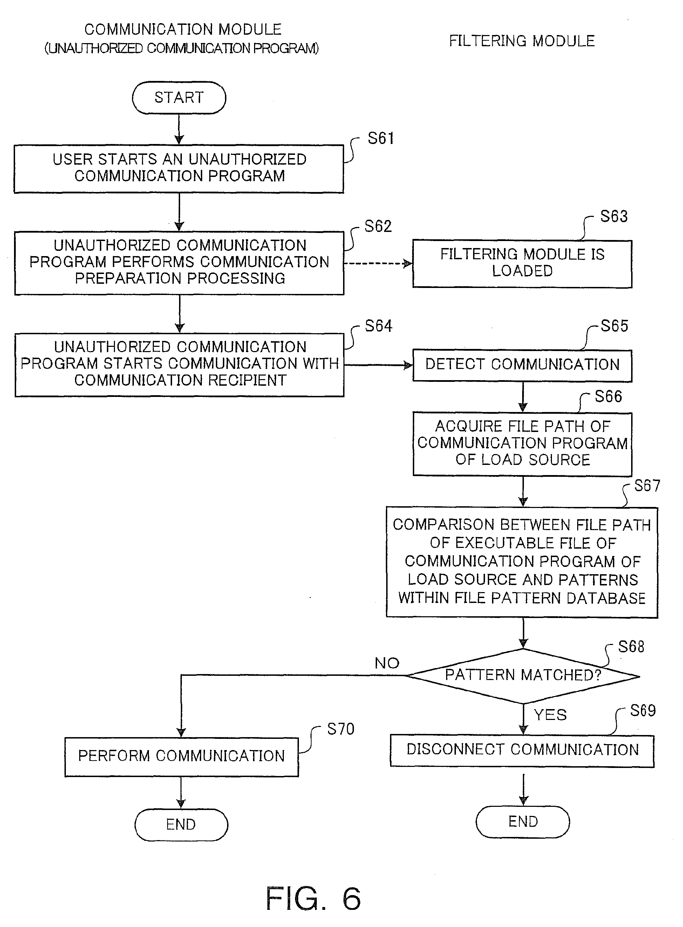

Next, an operation example of the monitoring of unauthorized communication program of the present invention will be described in detail in accordance with the flowchart shown in Fig. 6. An operation when connected with a communication recipient by an unauthorized communication program will be described as an example here, and the same holds for operations at the time of occurrence of other communication start requests (for example, a data transmission request).

On the user terminal, after the communication module 11 (an unauthorized communication program in the present embodiment) is started (step S61), when the unauthorized communication program performs preparation processing for performing communications (step S62), the filtering module 12 is loaded before the execution of the communications by the unauthorized communication program. When the communication module 11 is started, the filtering module 12 is loaded (step S63) and targets all programs performing communications, and is not limited to unauthorized communication programs only.

When the unauthorized communication program attempts to start the connection with the communication recipient (step S64), the filtering module 12 detects the connection request. Once the communication module 11 is loaded, when an event occurs in the communication module 11, the event can be detected (step S65).

The filtering module 12, on detecting the communication request to the communication recipient, acquires the file path of the unauthorized communication program of the load source (the connection request source) and reads its executable file (step S66). Then, using the file pattern database 13 in which file patterns acquired from the centralized control server in advance are stored, the filtering module 12 performs a matching search between the file pattern of the unauthorized communication program of the connection request source and the pattern of each unauthorized communication program stored in the file pattern database 13. The file pattern to be compared is either part of or is the entire pattern of the binary pattern of the executable file of the unauthorized communication program, and is set in accordance with the type of unauthorized communication program. For example, when it is desired that a program is regarded as an unauthorized communication program (for example, WinMX) when only both the first bit sequence and the second bit sequence within the executable file are matched, even when other contents are not matched, pattern matching is performed with parts (information on which matching search is not performed) other than the first and second bit sequences made purposely empty (step S67).

The presence or absence of a communication module 11 with the file pattern matched is judged by the step S67 (step S68), and when it is present, it is judged as to whether or not the unauthorized communication program having the file pattern is set in the regulation rules as an object to be regulated. When it is an object to be regulated, appropriate regulation processing is performed in accordance with the prescription of the regulation rules. In the present embodiment, the connection request is not accepted, and the connection processing with the communication recipient is not performed (step S69). The processing of the communication start request is then terminated, and the monitoring processing on communications continues. Conversely, when it is judged that a communication module 11 with the file pattern matched is not present, and it is judged as not an unauthorized communication program in step S68, the communication start request (the connection request in the present embodiment) is performed (step S70), and the monitoring processing on communications continues. In step S69, regulation processing is performed, and it is judged as to whether or not the form of alert is set in the regulation rules. When it is set, notification processing to the user or the administrator, or both, is performed in accordance with the form of the alert.

The centralized control server exemplified as being installed in the local area network in the above-described embodiment may be installed on the Internet. The filtering module exemplified as being a computer program may be configured by hardware, which functions as part of a means for processing the steps possessed by the filtering module

### INDUSTRIAL APPLICABILITY

The present invention can be favorably applied to computer network systems set up in companies, public institutions, schools, or the like. It can be also used effectively in the ordinary family in a family environment which parents cannot monitor properly. Moreover, it can prevent contents downloaded by a user (i.e., to a storage medium of a computer using websites providing contents such as music and movies) from being transferred to other computers, and therefore can be applied to systems, information processors, and programs for preventing malicious acts and crime.

## Claims

1. An unauthorized communication program regulation system in a client-server system which has a centralized control server for controlling client computers in a local area network, wherein said centralized control server is provided with distribution means for distributing file patterns for identifying various kinds of unauthorized communication programs to each client computer under server control through the local area network,
said client computer is provided with a filtering module for performing monitoring and regulation processing on communications originating from said computer, and
said filtering module is provided with a database for storing said file patterns acquired from said centralized control server, communication detection means for monitoring communication events originating from a communication module started by said client computer and detecting the occurrence of a communication start request to other computers, inspection means for comparing the file pattern of the communication module of a request source of said communication start request to the file patterns within said database and inspecting whether or not said communication module is an unauthorized communication program, and communication regulation means for regulating the communication of said communication module before the execution of said communication start request when said inspection means has judged it to be an unauthorized communication program.

2. The unauthorized communication program regulation system according to claim 1, wherein
said centralized control server is further provided with setting means for setting regulation rules including information on the presence or absence of a regulation of each communication module, and
said communication regulation means performs said regulation processing on communications targeting a communication module in which the presence of a regulation is designated by said setting means.

3. The unauthorized communication program regulation system according to claim 2, wherein said setting means displays the list of said unauthorized communication programs in which said file patterns are registered on a display section of a control terminal as a setting screen and has a function of setting one communication module selected from the list as a regulation target.

4. The unauthorized communication program regulation system according to claim 1, wherein said communication start request is a connection request or a data transmission request to other computers.

5. The unauthorized communication program regulation system according to claim 1 having a data center for integrally controlling said file patterns, wherein said distribution means has a function of distributing the latest file patterns received from said data center to each client computer at appropriate times.

6. The unauthorized communication program regulation system according to claim 1, wherein said filtering module continues said monitoring and regulation processing on said unauthorized communication programs when the monitoring of said unauthorized communication program starts, even under the condition that said client computer cannot communicate with said centralized control server.

7. The unauthorized communication program regulation system according to claim 2, wherein said file patterns possessed by said centralized control server include file patterns for identifying normal applications other than unauthorized communication programs, and
said communication regulation means has a function of allowing only communications of applications designated as "no regulation" by said setting means.

8. An unauthorized communication program regulation processing program in a client-server system which has a centralized control server for controlling client computers in a local area network, which allows said client computer to achieve a function of receiving file patterns for identifying various kinds of unauthorized communication programs and storing them in a database, a function of monitoring communication events originating from a communication module started by said client computer and detecting the occurrence of a communication start request to other computers, a function of comparing the file pattern of the communication program of a request source of said communication start request to the file patterns within said database and inspecting whether or not said communication module is an unauthorized communication program, and a function of regulating the communication of said communication module before the execution of said communication start request when said inspection means has judged the communication module to be an unauthorized communication program.

9. The unauthorized communication programregulationprocessing program according to claim 8, which further allows said client computer to achieve a function of receiving setting information on regulation rules including information on the presence or absence of a regulation of each communication module registered in said centralized control server and a function of performing said regulation processing on communications targeting a communication module in which the presence of a regulation is designated by said setting means.
